# EUROPEAN PATENT APPLICATION

(11) **EP 4 738 590 A1**
(43) Date of publication of application: **06.05.2026**
(21) Application number: 25742105.7
(22) Date of filing: 02.01.2025
(51) Int. Cl.: H01M 50/367, H01M 50/342, H01M 50/502, H01M 50/178, H01M 10/658, H01M 50/186, H01M 50/249, H01M 50/211

(54) **BATTERY MODULE, AND BATTERY PACK AND VEHICLE INCLUDING SAME**

(30) Priority: 19.01.2024 KR 20240008985; 23.08.2024 KR 20240113576
(71) Applicant: LG Energy Solution, Ltd., Seoul 07335 (KR)
(72) Inventor: KIM, Soo-Youl, Daejeon 34122 (KR); PARK, Gi-Chan, Daejeon 34122 (KR); PARK, Ju-Hun, Daejeon 34122 (KR)
(74) Representative: Plasseraud IP
(86) International application number: PCT/KR2025/000038
(87) International publication number: WO 2025/155006

(57) **Abstract**

The present disclosure relates to a battery module including: a cell assembly including a plurality of battery cells; a module terminal configured to be electrically connected to the plurality of battery cells; a module case configured to receive the cell assembly, and having the module terminal provided on one side and a first venting hole formed on the other side to discharge gas generated from the battery cell to the outside; and a block member configured to guide the gas to the first venting hole.

## Description

### TECHNICAL FIELD

The present disclosure relates to a battery module, and a battery pack and vehicle including the same.

This application is based on and claims priority from Korean Patent Application No. 10-2024-0008985, filed on January 19, 2024, with the Korean Intellectual Property Office, the disclosure of which is incorporated herein in its entirety by reference.

This application is based on and claims priority from Korean Patent Application No. 10-2024-0113576, filed on August 23, 2024, with the Korean Intellectual Property Office, the disclosure of which is incorporated herein in its entirety by reference.

### BACKGROUND ART

Secondary battery cells, which are easy to apply depending on the product group and have electrical features such as high energy density and the like, are generally used in electric vehicles (EVs) or hybrid electric vehicles (HEVs) that are driven by an electrical drive source, as well as in portable devices. These secondary battery cells are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. When a high output voltage is required, a battery module or battery pack may be configured by connecting a plurality of battery cells in series. In addition, a battery module or battery pack may be configured by connecting multiple battery cells in parallel in order to increase the charge/discharge capacity.

A common method for configuring a battery pack by connecting a plurality of battery cells in series/parallel is to preferentially configure a battery module including at least one battery cell and then add other elements to one or more battery modules, thereby configuring a battery pack or battery rack. Alternatively, a battery pack has recently been manufactured in a cell-to-pack type in which multiple battery cells are directly stored in a pack housing, instead of being modularized.

However, in the case where a battery pack includes multiple battery modules therein, it may be vulnerable to a chain thermal reaction between the battery modules. For example, if an event such as thermal runaway occurs inside one battery module, the thermal runaway may be propagated to other battery modules. If the propagation of thermal runaway between the battery modules fails to be properly suppressed, an event occurring in a specific battery module may cause a chain reaction in other battery modules, which may result in a major problem such as an explosion or fire.

Therefore, it is necessary to develop a structure capable of preventing gas or flame from spreading to other cells inside the battery module or to other adjacent battery modules and causing thermal runaway, even if a thermal event occurs in a battery cell inside the battery module, thereby suppressing and delaying thermal propagation.

In addition, there is a need to develop a structure capable of quickly discharging high-temperature gas or flame generated in a battery module when a thermal runaway occurs in the battery module to the outside, thereby dissipating heat accumulation from the battery module.

### DISCLOSURE

### Technical Problem

The present disclosure is designed to solve the problems of the related art, and therefore the present disclosure is directed to providing a battery module capable of quickly discharging high-temperature gases or flames generated in the battery module to the outside when thermal runaway occurs in the battery module, thereby dissipating heat accumulation inside the battery module.

The present disclosure is also to provide a battery pack and vehicle including such a battery module.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a cell assembly comprising a plurality of battery cells; a module terminal configured to be electrically connected to the plurality of battery cells; a module case configured to receive the cell assembly, and having the module terminal provided on one side and a first venting hole formed on the other side to discharge gas generated from the battery cell to the outside; and a block member configured to guide the gas to the first venting hole.

A plurality of first venting holes may be disposed in at least one direction.

Each of the plurality of battery cells may include an electrode lead, and the battery module may further include a bus-bar frame provided on a side of the battery cell where the electrode lead is provided and having a second venting hole formed to communicate with the first venting hole.

A plurality of second venting holes may be disposed along a stacking direction of the battery cells.

The second venting hole may be configured to allow at least some of the electrode leads of the plurality of battery cells to pass therethrough.

The block member may include a first block member provided on an outer side of the bus-bar frame and configured to suppress gas discharged from the second venting holes from moving along a stacking direction of the battery cells in a space between the bus-bar frame and the other side of the module case.

A plurality of first block members may be disposed along the stacking direction of the battery cells.

The first block member may be configured to extend along a height direction of the bus-bar frame.

The first block member may be configured to be compressed by the bus-bar frame.

The first block member may be configured to be compressed by the module case.

The block member may include a second block member interposed between the bus-bar frame and the cell assembly.

The second block member may be configured to extend along a height direction of the battery cell.

The battery cell may include a receiving portion configured to receive an electrode assembly and extending in one direction, and a sealing portion configured to protrude in one direction from the receiving portion, and the second block member may be provided on at least one side of the sealing portion.

The cell assembly may further include a barrier member provided between the battery cells, and the second block member may be provided between the barrier member and the sealing portion of the battery cell.

The second block member may be configured to pressurize an inner surfaces of the receiving portion and the bus-bar frame.

A plurality of second block members may be disposed on one side and the other side of the battery cell, respectively, and the second block members may be provided in a larger number on one side of the battery cell than on the other side of the battery cell.

The battery cell may include a fixing member configured to fix an upper surface.

In another aspect of the present disclosure, there is provided a battery pack including a battery module according to the present disclosure.

In another aspect of the present disclosure, there is provided a vehicle including a battery module according to the present disclosure.

### Advantageous Effects

According to one aspect of the present disclosure, high-temperature gas or flame generated in battery cells inside a battery module can be quickly discharged to the outside through directional venting to the rear side where the module terminal is not provided. Accordingly, the safety and reliability of the battery module can be ensured.

In addition, according to another aspect of the present disclosure, by partitioning and dividing the battery cells inside the battery module, even if a thermal event occurs in some battery cells inside the battery module, it is possible to effectively prevent or delay gas or flame from spreading to other battery cells inside the battery module and causing thermal runaway.

In addition, according to another aspect of the present disclosure, high-temperature gas or flame discharged to the outside of the battery module can be prevented from flowing back into the battery module.

Furthermore, according to another aspect of the present disclosure, high-temperature gas or flame can be quickly discharged to the outside of the battery pack through directional venting from each battery pack including a plurality of battery modules.

In addition, according to another aspect of the present disclosure, it is possible to prevent or delay events resulting from thermal runaway of a battery pack including a plurality of battery modules or a device equipped with them, such as a fire or explosion.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a front perspective view of a battery module according to an embodiment of the present disclosure.
FIG. 2 is a rear perspective view of a battery module according to an embodiment of the present disclosure.
FIG. 3 is an exploded perspective view of a battery module according to an embodiment of the present disclosure.
FIG. 4 is a side view of a battery cell included in a battery module according to an embodiment of the present disclosure.
FIG. 5 is a rear cross-sectional view of a battery module according to an embodiment of the present disclosure, which may be a cross-sectional view taken along line I - I' in FIG. 1.
FIG. 6 is a front view of a rear plate included in a battery module according to an embodiment of the present disclosure.
FIG. 7 is a front view of a rear bus-bar frame included in a battery module according to an embodiment of the present disclosure.
FIG. 8 is a drawing illustrating a state in which an electrode lead of a battery cell included in a battery module is connected to a rear bus-bar frame according to an embodiment of the present disclosure.
FIG. 9 is a cross-sectional perspective view of a rear bus-bar frame included in a battery module according to an embodiment of the present disclosure.
FIG. 10 is an enlarged cross-sectional perspective view of a part of a rear bus-bar frame included in a battery module according to an embodiment of the present disclosure.
FIG. 11 is a cross-sectional perspective view of a rear of a battery module to which a first block member is applied according to an embodiment of the present disclosure.
FIG. 12 is a front view of a bus-bar frame included in a battery module to which a first block member is applied according to an embodiment of the present disclosure.
FIG. 13 is an exploded view of a rear plate in a battery module to which a first block member is applied according to an embodiment of the present disclosure.
FIG. 14 is a cross-sectional view of a rear of a battery module to which a first block member is applied according to an embodiment of the present disclosure, which may be a cross-sectional view taken along line II - II' in FIG. 1.
FIG. 15 is an enlarged cross-sectional view of a rear of a battery module to which a block member is applied according to an embodiment of the present disclosure.
FIG. 16 is a perspective view illustrating the internal configuration of a rear of a battery module to which a second block member is applied according to an embodiment of the present disclosure.
FIG. 17 is a cross-sectional view of a front of a battery module to which a second block member is applied according to an embodiment of the present disclosure.
FIG. 18 is a perspective view illustrating the internal configuration of a front of a battery module to which a second block member is applied according to an embodiment of the present disclosure.
FIG. 19 is a schematically perspective view of a battery pack including a battery module according to an embodiment of the present disclosure.
FIG. 20 is a schematically perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction, i.e., a height direction of the battery cell.

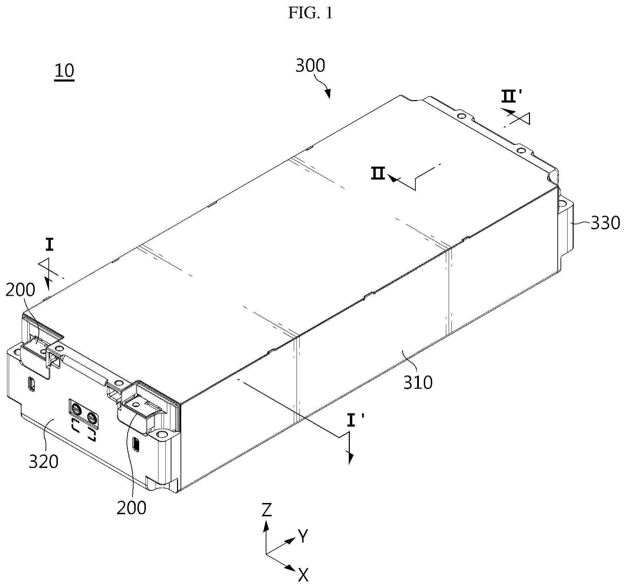

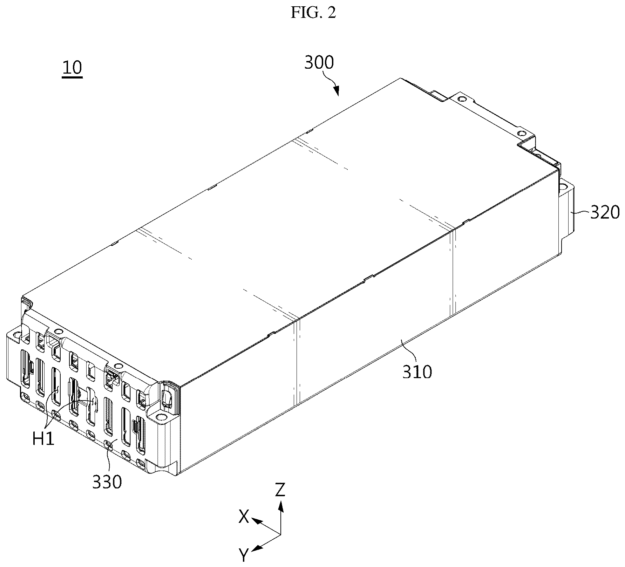

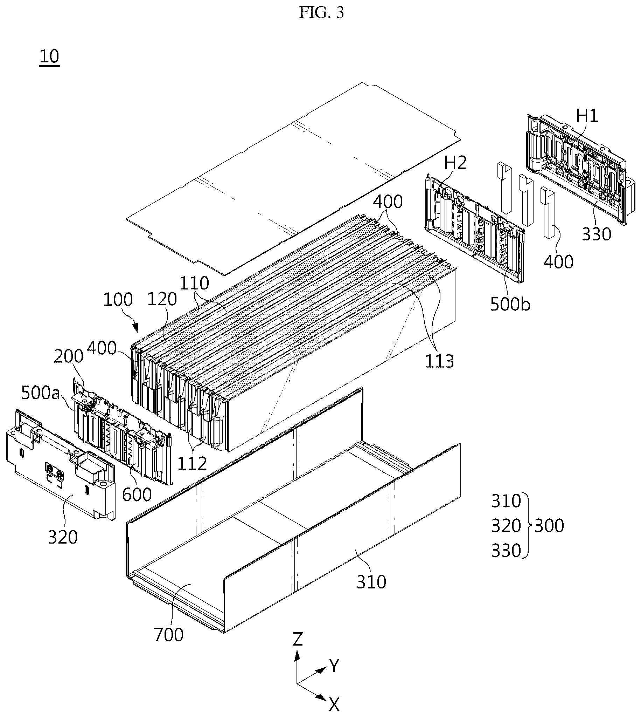

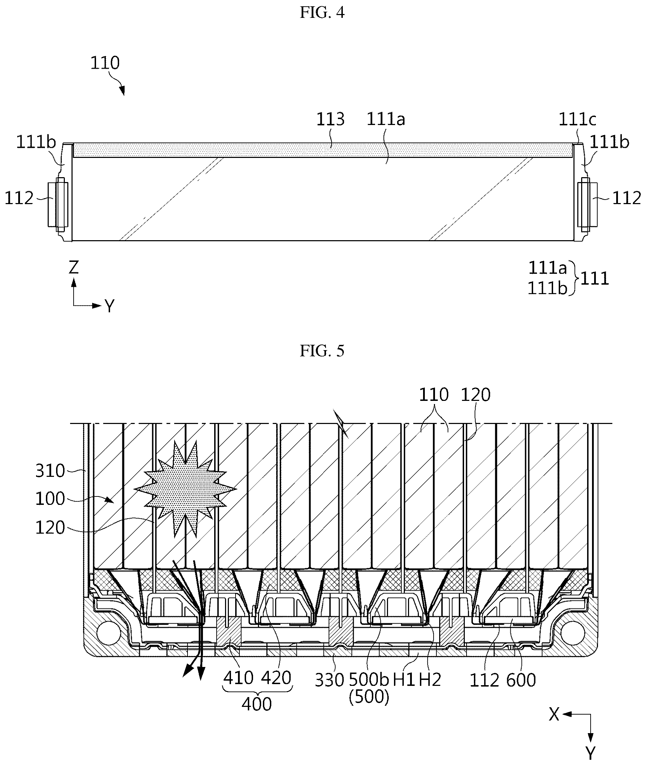

FIG. 1 is a front perspective view of a battery module according to an embodiment of the present disclosure, FIG. 2 is a rear perspective view of a battery module according to an embodiment of the present disclosure, and FIG. 3 is an exploded perspective view of a battery module according to an embodiment of the present disclosure. In addition, FIG. 4 is a side view of a battery cell included in a battery module according to an embodiment of the present disclosure, and FIG. 5 is a cross-sectional view of a battery module according to an embodiment of the present disclosure, which may be a cross-sectional view taken along line I - I' in FIG. 1.

Referring to FIGS. 1 to 5, a battery module 10 according to an embodiment of the present disclosure includes a cell assembly 100, a module terminal 200, a module case 300, and a block member 400.

Referring to FIG. 3, the cell assembly 100 may include a battery cell 110. A plurality of battery cells 110 may be provided. In this case, the plurality of battery cells 110 may be electrically connected to each other.

The plurality of battery cells 110 may be stacked in one direction. For example, as illustrated in FIG. 3, the plurality of battery cells 100 may be arranged side by side in the left-right direction (X-axis direction) while standing in the vertical direction (Z-axis direction).

More specifically, referring to FIG. 4, the plurality of battery cells 110 may include an electrode assembly and a cell case 111 that stores the electrode assembly. The cell case 111 may be a laminate sheet including a resin layer and a metal layer.

In addition, the respective battery cells 110 may have an electrode lead 112. The electrode lead 112 may be connected to the electrode assembly and may extend to the outside of the cell case 111, thereby functioning as an electrode terminal.

A pair of electrode leads 112 may be provided, and the pair of electrode leads 112 may extend from both ends of the battery cell 110, that is, in the longitudinal direction (+Y-axis direction). In this case, the pair of electrode leads 112 may be a positive electrode lead and a negative electrode lead.

Meanwhile, the present disclosure is not limited to a specific type or form of the battery cell 110, and various battery cells 110 known at the time of filing the present disclosure may be applied to configure the battery module 10 of the present disclosure. In the present embodiment, although a pouch-type secondary battery with high energy density and easy stacking will be described as illustrated in the drawings, it is obvious that a cylindrical or prismatic secondary battery may also be applied to the battery cell 100.

The module terminal 200 may be configured to be electrically connected to the plurality of battery cells 110. The module terminal 200 may include a positive electrode terminal and a negative electrode terminal. In addition, the module terminal 200 may be configured to be electrically or communicatively connected to a control device such as a BMS.

Referring to FIGS. 1 to 3, the module case 300 may be configured to store the cell assembly 100. Specifically, the module case 300 may have a storage space formed therein, and the storage space may be configured to store the cell assembly 100. The module case 300 may be configured using a metal material having rigidity and heat resistance to physically or chemically protect the stored cell assembly 100.

The module case 300 may be provided with a module terminal 200 on one side. For example, as in the embodiment illustrated in FIG. 1, the module terminal 200 may be provided on the front side of the module case 300.

In addition, a first venting hole H1 may be formed in the module case 300. The first venting hole H1 may be configured to allow venting gas generated in the battery cell 110 to be discharged to the outside of the module case 300. In particular, the first venting hole H1 may be formed on the other side of the module case 300, which indicates the side of the module case 300 opposite the side on which the module terminal 200 is provided. That is, the module terminal 200 and the first venting hole H1 may be provided on the opposite sides. For example, as in the embodiment illustrated in FIG. 2, the first venting hole H1 may be formed on the rear side of the module case 300.

This enables directional venting in one direction in the battery module 10 according to an embodiment of the present disclosure. For example, as illustrated in FIGS. 1 to 5, directional venting toward the rear of the battery module 10 may be possible through the first venting hole H1.

As described above, the first venting hole H1 provided on the rear side of the module case 300 may be configured such that gas or flame generated inside the battery module 10 when thermal runaway occurs in the battery module 10 may be discharged to the outside of the battery module 10. The remaining portion of the module case 300, excluding the first venting hole H1, may be closed, and gas or flame may be discharged in a straight line toward the first venting hole H1.

According to the above-implemented configuration of the present disclosure, regardless of where a thermal event occurs in the battery cell 110, gas or flame generated in the battery cell 110 may be discharged to the outside of the battery module 10 through specific first venting holes H1 provided at the rear of the battery cell 110, so that venting may be performed smoothly.

Referring to FIGS. 1 to 5, the block member 400 may be configured to guide gas or flame to the first venting hole H1. In particular, the block member 400 may be configured to suppress venting gas or flame from being discharged to the side where the first venting hole H1 is not provided.

The block member 400 may be provided inside the module case 300. Specifically, the block member 400 may be provided between the module case 300 and the cell assembly 100. The block member 400 may guide gas or the like flowing in the space formed between the module case 300 and the cell assembly 100 toward the first venting hole H1.

According to the above-implemented configuration of the present disclosure, when a thermal event occurs in a battery cell 110 in the battery module 10, the venting gas or the like may be discharged only in one target direction, such as a direction in which the first venting hole H1 is formed, as indicated by the arrows in FIG. 5. That is, since the surrounding areas of the first venting hole H1 are all blocked by the block member 400, directional venting of the venting gas may be more effectively induced toward the first venting hole H1.

Therefore, according to above-implemented configuration, the venting gas may be quickly guided to the first venting hole H1 and discharged to the outside. That is, according to the above-implemented configuration of the present disclosure, heat accumulation may be prevented or suppressed inside the battery module 10. Therefore, the safety and reliability of the battery module 10 may be ensured.

Furthermore, the block member 400 may be configured to divide the space through which gas or the like flows into a plurality of parts. The block member 400 may be configured to suppress the venting gas from moving to an adjacent venting space. That is, the block member 400 may be configured to divide the venting path for each set of battery cells 110.

For example, as in the embodiment illustrated in FIG. 5, the block member 400 may be configured to suppress venting gas or the like generated in a group of two battery cells 110 from moving toward another group of battery cells 110. In this case, the group of battery cells 110 may be configured to have a capacity of approximately 230 to 300 Ah.

According to the above-implemented configuration of the present disclosure, since the space through which gas or the like flows is partitioned, when a thermal event occurs in a battery cell 110, venting gas or flame may be prevented from spreading to an adjacent battery cell 110, thereby effectively preventing or delaying thermal runaway propagation between the battery cells 110.

The block member 400 may include an elastic material such as silicon. As a result, the block member 400 may be compressed by components inside the battery module 10. According to the above-implemented configuration of the present disclosure, the space through which gas or the like flows may be sealed more reliably, thereby effectively inducing directional venting toward the first venting hole H1. In addition, the block member 400 may have at least one of flame-retardant performance and fire-resistant performance.

Meanwhile, referring to FIGS. 1 to 3, the module case 300 may have a case body 310, a front plate 320, and a rear plate 330.

Specifically, as shown in the drawings of the present disclosure, the case body 310 may be configured as a U-frame. In the case where the case body 310 is configured as a U-frame, it may be configured to cover both sides and the lower side of the cell assembly 100. The case body 310 may include left and right plates covering both sides of the cell assembly 100, and a lower plate covering the lower side of the cell assembly 100. In addition, the left plate, the right plate, and the lower plate may be configured in an integrated form. In this case, the case body 310 may have upper, front, and rear openings.

In the case where the case body 310 is configured as a U-frame, a top plate coupled to the upper opening of the case body 310 may be further included. The top plate may be welded to the case body 310. In this case, the shape after the top plate and the case body 310 are coupled may be a square tube with front and rear openings.

In addition, the module case 300 may be formed in various other shapes. For example, the module case 300 may be configured as a mono frame. For example, the case body 310 may be configured in the shape of a square tube having an upper surface, a lower surface, a left surface, and a right surface and having front and rear openings.

The front plate 320 and the rear plate 330 may be respectively provided in the front opening and the rear opening of the case body 310. The front plate 320 and the rear plate 330 may be welded to the case body 310. Alternatively, the front plate 320 and the rear plate 330 may be formed integrally with the case body 310.

According to an embodiment of the present disclosure, the front plate 320 may be provided with a module terminal 200. The front plate 320 may partially have a hole or slit for exposing components required to be exposed to the outside, such as the module terminal 200 or a connector of the battery module 10.

In addition, a first venting hole H1 may be formed in the rear plate 330. As a result, venting gas or the like generated when a thermal event occurs in the battery cell 110 may be discharged to the rear side of the battery module 10 through the first venting hole H1.

Meanwhile, the front plate 320 and the rear plate 330 may be made of, for example, an insulating material on the inner surface thereof and a metal material on the outer surface.

Meanwhile, referring to FIG. 3, the battery module 10 according to an embodiment of the present disclosure may further include a cooling plate 700.

The cooling plate 700 may be interposed between the cell assembly 100 and the module case 300. For example, referring to FIG. 3, the cooling plate 700 may be provided between one side of the cell assembly 100, for example, the bottom of the cell assembly 100, and the bottom surface of the module case 300.

Meanwhile, although the drawings of this specification illustrate the configuration in which the cooling plate 700 is located at the bottom of the battery module 10, the cooling plate 700 may also be located at another side, such as the top of the battery module 10. In addition, the cooling plate 700 may be located at two or more sides of the battery module 10. For example, the cooling plate 700 may be provided at the top and bottom of the cell assembly 100, respectively.

The cooling plate 700 may be configured to transfer heat between the cell assembly 100 and the module case 300. The battery cell 110 may generate heat during use, and if this heat is not properly discharged, the performance of the battery cell 110 cannot be stably ensured, which leads to thermal runaway, ignition, or explosion of the battery cell 110 in worst cases. In this regard, the heat generated from the battery cell 110 needs to be properly discharged to the outside through the module case 300. In this case, the cooling plate 700 may effectively transfer heat between the battery cell 110 and the module case 300, thereby ensuring stable cooling performance for the battery module 10.

The cooling plate 700 may be equipped with a material capable of transferring heat. In particular, the cooling plate 700 may be made of a resin material, and in this case, the cooling plate 700 may be referred to as a thermal resin. The cooling plate 700 may include at least one of various materials, such as urethane, silicone, and epoxy. The cooling plate 700 may be expressed as other terms such as a TIM (Thermal Interface Material), potting resin, or the like, and various thermally conductive adhesives or TIMs known at the time of filing the present disclosure may be used for the material of the cooling plate 700 of the battery module 10 according to the present disclosure.

The cooling plate 700 may be interposed between all battery cells 110 provided in the cell assembly 100 and the module case 300. That is, the cooling plate 700 may be configured to come into direct contact with all battery cells 110 included in the cell assembly 100. According to this implemented configuration of the present disclosure, heat dissipation may be performed through the cooling plate for all battery cells 110 included in the battery module 10. Therefore, the overall cooling performance of the battery module 10 may be further improved.

In addition, the cooling plate 700 may be configured to fix the cell assembly 100 to the module case 300. To this end, the cooling plate 700 may have an adhesive component. For example, as shown in FIG. 3, in the case where the cooling plate 700 is located at the bottom of the cell assembly 100, the cooling plate 700 may bond and fix the bottom of the cell assembly 100 to the bottom surface of the module case 300.

This cooling plate 700 may be applied to the bottom surface of the module case 300 before the cell assembly 100 is received in the module case 300 and then hardened over time.

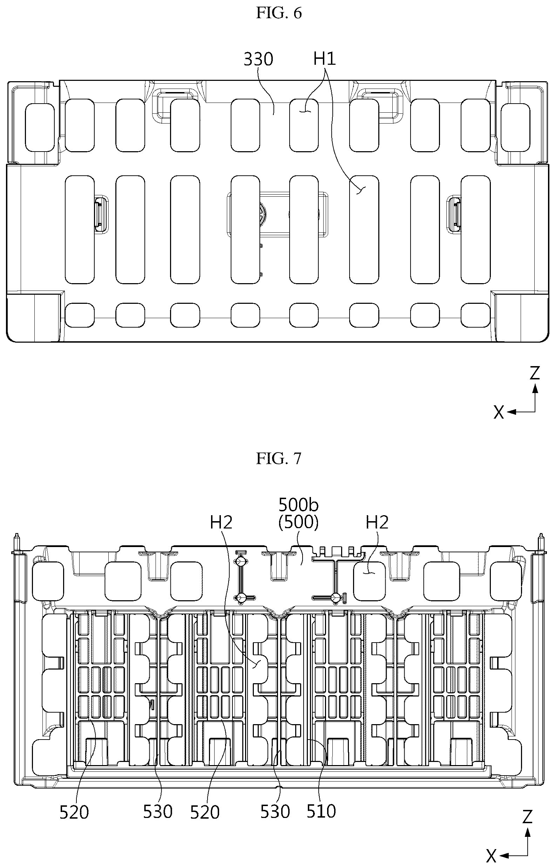

FIG. 6 is a front view of a rear plate included in a battery module according to an embodiment of the present disclosure.

Referring to FIG. 6, a plurality of first venting holes H1 may be provided. The first venting holes H1 may be arranged in at least one direction. The first venting holes H1 may be arranged in a plurality of rows. For example, as illustrated in FIG. 6, the first venting holes H1 may be arranged in a row along the height direction of the rear plate 330, and the plurality of first venting holes H1 arranged in a row may be arranged in multiple rows along the stacking direction of the battery cell 110, that is, in the width direction of the rear plate 330. The plurality of first venting holes H1 may be provided at regular intervals from each other.

According to the above-implemented configuration of the present disclosure, regardless of where a thermal event occurs in the battery cell 110, the venting gas or flame may be smoothly discharged to the outside of the battery module 10 through specific first venting holes H1 provided at the rear of the battery cell 110.

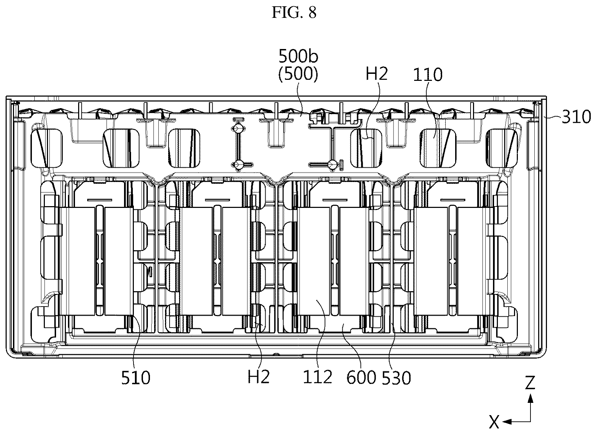

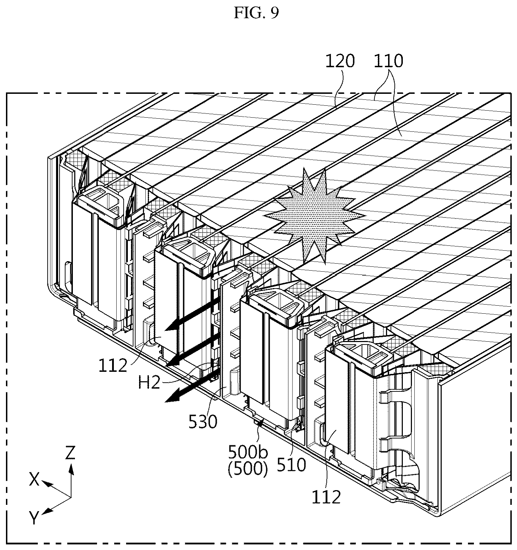

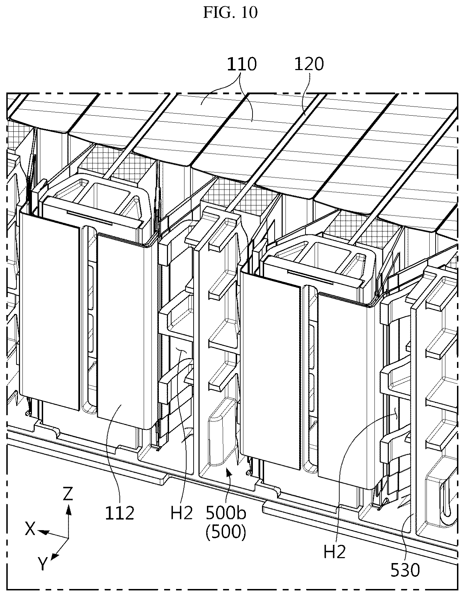

FIG. 7 is a front view of a rear bus-bar frame included in a battery module according to an embodiment of the present disclosure, and FIG. 8 is a drawing illustrating a state in which an electrode lead of a battery cell included in a battery module is connected to a rear bus-bar frame according to an embodiment of the present disclosure. In addition, FIG. 9 is a cross-sectional perspective view of a rear bus-bar frame included in a battery module according to an embodiment of the present disclosure, and FIG. 10 is an enlarged cross-sectional perspective view of a part of a rear bus-bar frame included in a battery module according to an embodiment of the present disclosure.

Referring further to FIGS. 7 to 10 in addition to FIG. 3, the battery module 10 of the present disclosure may further include a bus-bar frame 500. The bus-bar frame 500 may be provided inside the module case 300 and configured to cover at least one side of the cell assembly 100.

The bus-bar frame 500 may be located on the side where the electrode lead 112 of the battery cell 110 is provided. For example, as shown in FIG. 2, the electrode lead 112 may be located on the front and rear sides of the battery cell 110, and the bus-bar frame 500 may be coupled to the front and rear sides of the cell assembly 100.

Accordingly, the bus-bar frame 500 may include a front bus-bar frame 500a and a rear bus-bar frame 500b. The bus-bar frame 500 may be formed of, for example, a plastic material having electrical insulation properties.

Referring to FIGS. 7 to 10, a second venting hole H2 may be formed in the bus-bar frame 500. For example, as illustrated in the drawing of the present disclosure, the second venting hole H2 may be formed in the rear bus-bar frame 500b.

According to the above-implemented configuration of the present disclosure, the front bus-bar frame 500a does not have the second venting hole H2, so that the venting gas or flame may be more smoothly discharged in one direction, particularly toward the rear.

The second venting hole H2 may be configured to be in communication with the first venting hole H1. The second venting hole H2 may be provided to at least partially face the first venting hole H1. The first venting hole H1 and the second venting hole H2 may be disposed approximately in a straight line.

According to the above-implemented configuration of the present disclosure, the venting gas or flame may be discharged to the outside approximately in a straight line through the first venting hole H1 and the second venting hole H2. Therefore, the venting gas or flame may be discharged to the outside of the battery module 10 more quickly.

Meanwhile, referring to FIGS. 7 and 8, the bus-bar frame 500 may be provided with a lead slot 510. The lead slot 510 may be configured so that at least parts of the electrode leads 112 of a plurality of battery cells 110 may pass therethrough. The lead slot 510 may be provided so that the plurality of electrode leads 112 may pass therethrough in the +Y-axis or -Y-axis direction (front-back direction).

A plurality of lead slots 510 may be provided to be spaced apart from each other along the stacking direction (X-axis direction) of the battery cells 110. In this case, a plurality of electrode leads 112 passing through the lead slots 510 may be bent and stacked on each other. According to this stacking structure, a plurality of battery cells 110 whose electrode leads 112 are in contact with each other may be electrically connected to each other.

In addition, referring to FIG. 8, the battery module 10 according to an embodiment of the present disclosure may include a plurality of bus-bars 600. The plurality of bus-bars 600 may be configured to connect the battery cells 110 in series and/or in parallel.

The bus-bars 600 may be provided between the plurality of lead slots 510. As a result, the bus-bars 600 may be configured to be in direct contact with the electrode leads 112 passing through the lead slots 510. Specifically, the electrode leads 112 of the battery cells 110 may pass through the lead slots 510 of the bus-bar frame 500 and extend to the outside of the bus-bar frame 500, and the extended portions may be attached to the surface of the bus-bar 600 by welding or the like.

The bus-bar 600 may be made of a metal material such as copper, aluminum, nickel, or the like. In addition, the bus-bar 600 may be configured in the form of a bar extending in the height direction.

The bus-bar 600 may be attached to the outer surface of the bus-bar frame 500. To this end, the bus-bar frame 500 may include a bus-bar coupling portion 520. In addition, the bus-bar 600 may be located on the inner side of the electrode lead 112. That is, the bus-bar 600 may be positioned between the bent electrode lead 112 and the bus-bar frame 500.

In this case, as in the embodiment illustrated in FIG. 8, each of the stacked electrode leads 112 and bus-bar 600 may be provided in each bus-bar coupling portion 520.

Meanwhile, referring to FIGS. 7 to 10, a plurality of second venting holes H2 may be provided. The plurality of second venting holes H2 may be arranged along at least one direction. For example, the plurality of second venting holes H2 may be arranged in a row along the height direction of the bus-bar frame 500b. These second venting holes H2 may be configured to be connected to each other, as illustrated in FIG. 7. Accordingly, the second venting hole H2 may be configured to extend in the height direction of the bus-bar frame 500b. In this case, the second venting hole H2 may be configured in a rib shape when the rear bus-bar frame 500b is viewed from the front.

In addition, the plurality of second venting holes H2 may be disposed along the stacking direction of the battery cell 110. More specifically, the second venting hole H2 may be formed between the bus-bar coupling portions 520. That is, the second venting hole H2 may be disposed between the electrode lead 112 and the bus-bar 600 that are stacked on each other.

In addition, some of the plurality of second venting holes H2 may be configured to be integrated with the lead slot 510. That is, the second venting hole H2 may be configured to allow at least a part of the electrode leads 112 of the plurality of battery cells 110 to pass therethrough.

The remaining ones of the plurality of second venting holes H2 may be spaced a predetermined distance from the lead slot 510. The remaining second venting holes H2 may be configured to allow only a fluid such as venting gas to pass therethrough.

Meanwhile, referring to FIGS. 9 and 10, the second venting hole H2 may be configured to be partially open not only in the front-back direction but also in the left-right direction. Accordingly, as indicated by the arrows in FIG. 9, the venting gas or flame generated in the battery cell 110 may be discharged not only to the rear along the electrode leads 112 but also to the left-right direction from the second venting hole H2, thereby moving more quickly to the first venting hole H1.

In addition, referring to FIG. 9, the electrode lead 112 that passes through the lead slot 510 or the second venting hole H2 provided on the outermost side of the bus-bar frame 500 may be configured to be pressed toward the bus-bar 600 by the bus-bar frame 500. That is, the electrode lead 112 may be configured to be pressed inward by the rib shape of the bus-bar frame 500.

According to the above-implemented configuration of the present disclosure, in the case where a plurality of electrode leads 112 are stacked to be in contact with the bus-bar 600, the electrode lead 112 and the bus-bar 600 may come into more stable contact, so that the electrical connection between the electrode lead 112 and the bus-bar 600 may be more stably constructed.

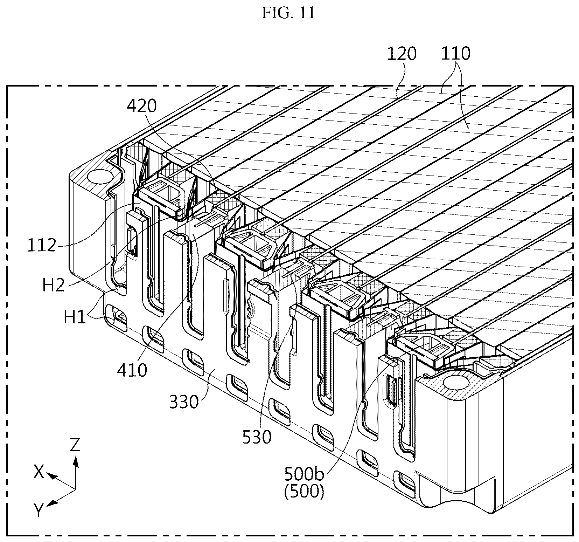

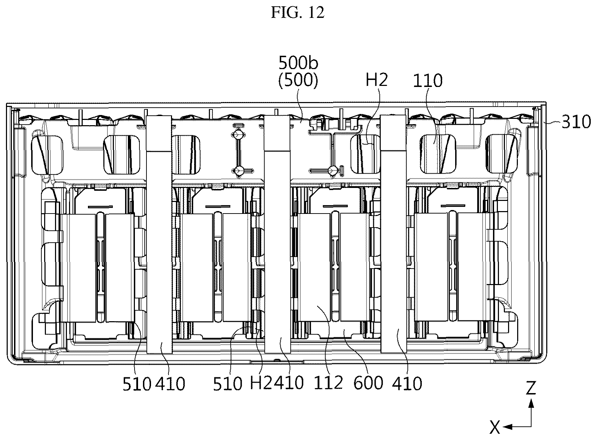

FIG. 11 is a cross-sectional perspective view illustrating a rear of a battery module to which a first block member is applied according to an embodiment of the present disclosure, and FIG. 12 is a front view of a bus-bar frame included in a battery module to which a first block member is applied according to an embodiment of the present disclosure.

Referring to FIG. 11 and FIG. 12, the block member 400 may be provided with a first block member 410. The first block member 410 may be provided on the outer side of the bus-bar frame 500. For example, the first block member 410 may be provided in a space between the rear bus-bar frame 500b and the rear plate 330.

The first block member 410 may be configured to suppress gas discharged from the second venting hole H2 from moving along the stacking direction of the battery cell 110 in the space between the bus-bar frame 500 and the other side of the module case 300. That is, the first block member 410 may be configured to suppress gas from moving along the stacking direction (left-right direction) of the battery cell 110 in the space between the rear bus-bar frame 500b and the rear plate 330.

According to the above-implemented configuration of the present disclosure, since the venting gas or the like may be suppressed from moving along the stacking direction of the battery cell 110 by the first block member 410, thermal propagation between the battery cells 110 may be suppressed or prevented. In addition, since the first block member 410 may guide the venting gas or the like toward the first venting hole H1, directional venting of the venting gas or the like may be more reliably induced.

More specifically, a plurality of first block members 410 may be provided. The plurality of first block members 410 may be arranged to be spaced apart from each other along the stacking direction of the battery cell 110, that is, in the left-right direction of the bus-bar frame 500b. For example, as in the embodiment illustrated in FIG. 10, the first block members 410 may be provided between the electrode leads 112 configured to be stacked on each other. Alternatively, the first block members 410 may be provided between adjacent bus-bars 600. That is, the first block members 400 may be provided in the space formed between the bus-bar coupling portions 520.

Accordingly, a plurality of spaces separated from each other may be formed between adjacent first block members 410 among the plurality of first block members 410. At least one first venting hole H1 may be located between adjacent first block members 410. For example, according to the embodiment illustrated in FIG. 12, two first venting holes H1 may be positioned between adjacent first block members 410.

In addition, the first block member 410 may be provided on the outer side of the second venting hole H2. Accordingly, the first block member 410 may be configured to at least partially face the second venting hole H2. At the same time, the first block member 410 may be configured to be spaced a predetermined distance apart from the second venting hole H2. As a result, the path of venting gas or flame discharged through the second venting hole H2 may not be obstructed.

According to the above-implemented configuration of the present disclosure, when a thermal event occurs in a battery cell 110, the venting gas or flame discharged through the second venting hole H2 may be induced to be discharged only to a space located at the rear of the battery cell 110 and the first venting hole H1 by the first block member 410. Therefore, directional venting of the venting gas or flame may be quickly performed toward the first venting hole H1.

In addition, according to the above-implemented configuration of the present disclosure, the venting gas or flame may be suppressed from moving beyond the first block member 410 to another space. Therefore, even if a thermal event occurs in a battery cell 110, the venting gas or flame may be suppressed or prevented from moving to another battery cell 110 and causing thermal propagation.

That is, the first block member 410 may be configured to separate the venting paths of the battery cells 110. For example, as in the embodiment illustrated in FIG. 11, the first block member 410 may be configured to suppress venting gas or the like generated in a group of four battery cells 100 from moving to another group of battery cells 100.

In addition, the first block member 410 may be configured to extend in the height direction of the bus-bar frame 500b. Referring to FIG. 12, the height of the first block member 410 may be configured to correspond to the height of the rear bus-bar frame 500b.

According to the above-implemented configuration of the present disclosure, the first block member 410 may more reliably divide the space along the height direction of the bus-bar frame 500b. As a result, venting gas or the like may be more reliably suppressed from moving to another space where another adjacent battery cell 110 is located.

In addition, the first block member 410 may include an elastic material. In addition, the first block member 410 may include a material having high heat resistance. In addition, the first block member 410 may include a material having high flame resistance. In addition, the first block member 410 may include a material having electrical insulation properties. For example, the first block member 410 may include a silicon material.

Furthermore, referring to FIG. 11, the first block member 410 may be configured to be compressed by the bus-bar frame 500b.

Specifically, referring to FIG. 11, the rear bus-bar frame 500b may further include a protrusion 530. The protrusion 530 may be configured such that at least a portion of the outer surface of the bus-bar frame 500b protrudes outward. In this case, the protrusion 530 may be provided to extend further outward than the outer surface of the bus-bar coupling portion 520. In addition, the protrusion 530 may be formed to extend in a straight line along the height direction of the first block member 410. This protrusion 530 may be provided between adjacent second venting holes H2.

This protrusion 530 may be configured to pressurize the first block member 410. The protrusion 530 may be provided in a number corresponding to the number of the first block members 410. Accordingly, the first block member 410 may be configured such that at least a part thereof is recessed by the protrusion 530. In this case, the first block member 410 may be provided in close contact with the bus-bar frame 500b without a gap.

According to this implemented configuration of the present disclosure, since the protrusion 530 is configured to compress the first block member 410, there may be no gap between the bus-bar frame 500b and the first block member 410, so that the first block member 410 may more reliably partition the spaces between the bus-bar frame 500b and the rear plate 330. Therefore, when thermal runaway propagation occurs in the battery module 10, the thermal runaway propagation may be effectively prevented or delayed between the battery cells 110.

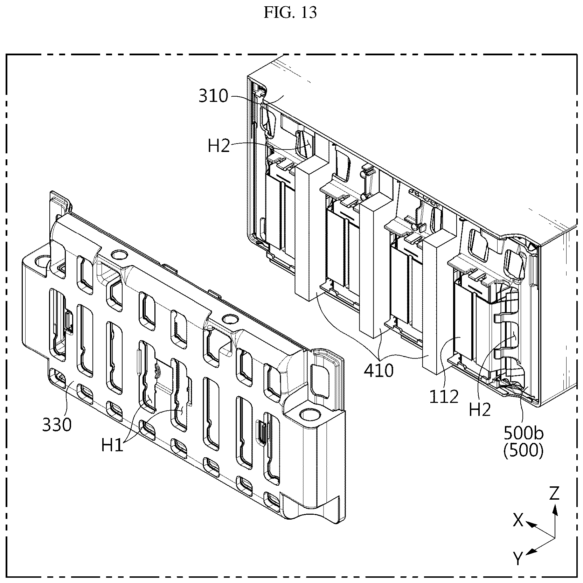

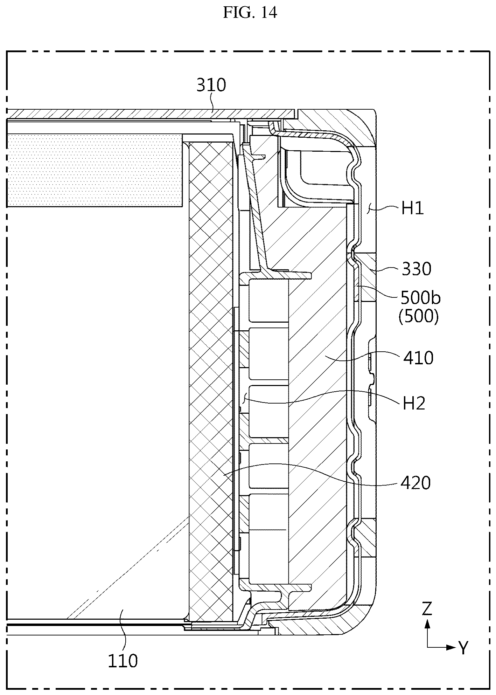

FIG. 13 is an exploded view of a rear plate in a battery module to which a first block member is applied according to an embodiment of the present disclosure, and FIG. 14 is a cross-sectional view illustrating a rear of a battery module to which a first block member is applied according to an embodiment of the present disclosure, which may be a cross-sectional view taken along line II - II' in FIG. 1.

Furthermore, the first block member 410 may be configured to be compressed by the module case 300. The first block member 410 may be configured to be pressurized in the front-back direction by the bus-bar frame 500b and the rear plate 330. Accordingly, the first block member 410 may be brought into close contact with the bus-bar frame 500b and the rear plate 330, thereby suppressing venting gas or flame from moving between the bus-bar frame 500b or the rear plate 330 and the first block member 410.

Specifically, the first block member 410 may be configured to be compressed to conform to the shape of the inner surface of the rear plate 330. The inner surface of the rear plate 330 may be configured to correspond to the shape of the bus-bar frame 500b. For example, as in the embodiment illustrated in FIG. 14, the upper portion of the rear plate 330 where the bus-bar 600 is not provided may be configured to protrude inward. Accordingly, the first block member 410 may also be configured to have an upper portion that is recessed inward to correspond to the shape of the inner surface of the rear plate 330.

According to the above-implemented configuration of the present disclosure, the first block member 410 may be compressed and coupled to correspond to the shape of the space between the rear plate 330 and the bus-bar frame 500b. Therefore, the space between the bus-bar frame 500b and the rear plate 330 may be more reliably separated by the first block member 410. In addition, according to the above-implemented configuration of the present disclosure, since the first block member 410 is stably fixed by the bus-bar frame 500b and the rear plate 330, the occurrence of bending deformation may be suppressed in the first block member 410. Therefore, even if a thermal event occurs, the high temperature and high pressure venting gas or flame caused by the thermal event is unlikely to spread to another space while pushing out the first block member 410.

Thus, according to the above-implemented configuration of the present disclosure, even if a thermal event occurs in a battery cell 110, the venting gas or flame may be reliably suppressed or prevented from moving to another battery cell 110 and causing thermal propagation.

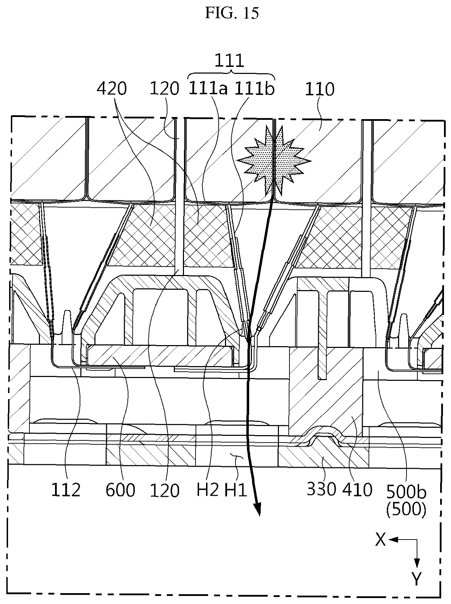

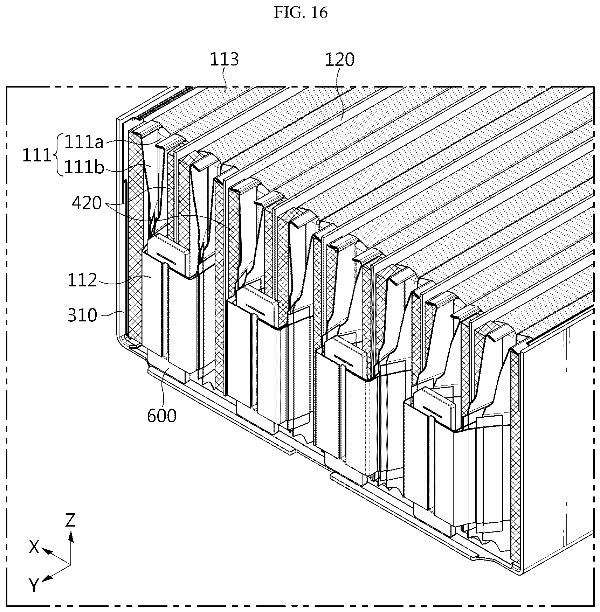

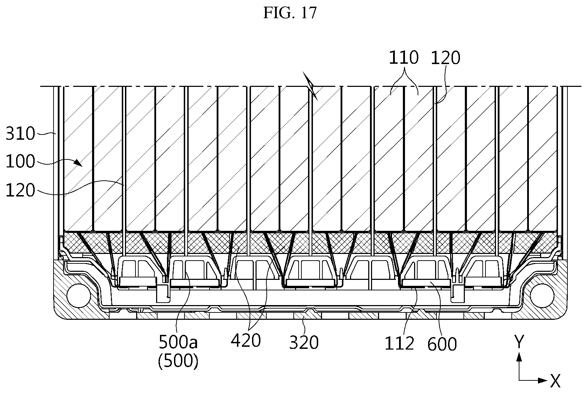

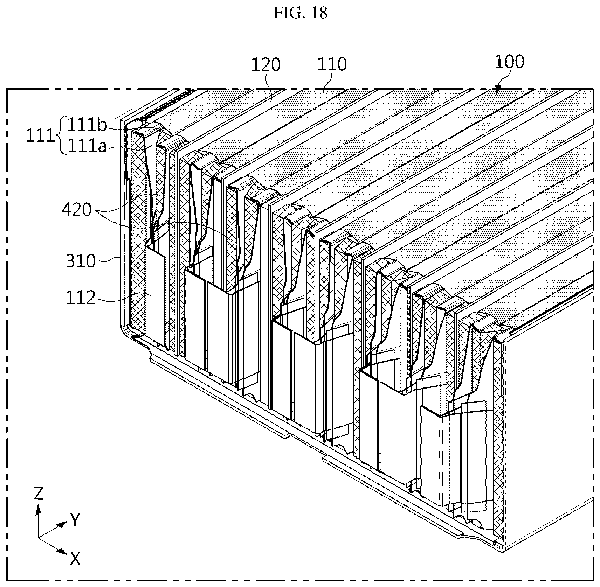

FIG. 15 is an enlarged cross-sectional view of a rear of a battery module to which a block member is applied according to an embodiment of the present disclosure, and FIG. 16 is a perspective view illustrating the internal configuration of a rear of a battery module to which a second block member is applied according to an embodiment of the present disclosure. In addition, FIG. 17 is a cross-sectional view of a front of a battery module to which a second block member is applied according to an embodiment of the present disclosure, and FIG. 18 is a perspective view illustrating the internal configuration of a front of a battery module to which a second block member is applied according to an embodiment of the present disclosure.

Referring to FIGS. 15 to 18, the block member 400 may include a second block member 420. The second block member 420 may be configured to guide venting gas or flame to be discharged in one direction, particularly toward the rear side. In addition, the second block member 420 may be configured to suppress venting gas or flame from being discharged in a direction other than the rear direction, particularly toward the front side.

The second block member 420 may be provided further inward than the first block member 410. That is, the second block member 420 may be provided closer to the battery cell 110 than the first block member 410.

Specifically, the second block member 420 may be interposed between the bus-bar frame 500 and the cell assembly 100. The second block member 420 may be provided at the front and/or rear side of the cell assembly 100. The second block member 420 may be provided only at the front side of the cell assembly 100, or may be provided at both the front and rear sides of the cell assembly 100. More specifically, the second block member 420 may be positioned at the front and/or rear side of the battery cell 110.

In addition, the second block member 420 may include a material having elasticity. In addition, the second block member 420 may include a material having high heat resistance. In addition, the second block member 420 may include a material having high flame resistance. In addition, the second block member 420 may include a material having electrical insulation properties. For example, the second block member 420 may include a silicon material.

According to the above-implemented configuration of the present disclosure, since the second block member 420 is provided, venting gas or flame may be guided to be discharged to the outside only in one direction, particularly through the first venting hole H1 provided on the rear side of the battery module 10.

In addition, the second block member 420 may be configured to extend along the height direction of the battery cell 110. The second block member 420 may be configured to extend by the height of a receiving portion 111a of the battery cell 110.

According to the above-implemented configuration of the present disclosure, the second block member 420 may more reliably block the movement of venting gas or flame in the height direction of the battery cell 110. Therefore, the venting gas or the like may be prevented from moving to the other adjacent battery cells 110 and causing thermal propagation.

A plurality of second block members 420 may be provided. The plurality of second block members 420 may be arranged in the stacking direction of the battery cell 110, i.e., in the left-right direction. The second block member 420 may be provided between the battery cells 110.

Meanwhile, referring to FIG. 4, in the case where the battery cell 110 of the present disclosure is provided as a pouch-type battery cell, the cell case 111 may include a receiving portion 111a and a sealing portion 111b.

The receiving portion 111a may be configured to receive the electrode assembly. The receiving portion 111a is an inner space having a concave surface facing the electrode assembly 100, and the electrode assembly 100 may be mounted in this inner space. In the embodiment illustrated in FIG. 4, the receiving portion 111a may have the shape of double cups formed on both sides of the cell case 111.

The receiving portion 111a may be configured to extend in one direction. That is, the receiving portion 111a may be configured to extend in the longitudinal direction of the battery cell 110.

The periphery of the receiving portion 111a may be heat-welded to form a sealing portion 111b. That is, the sealing portion 111b may be obtained by sealing the outer periphery of the receiving portion 111a. As in the embodiment illustrated in FIG. 4, the sealing portions 111b may be provided on three of the four sides of the battery cell 110.

In this case, the sealing portion 111b may be configured to protrude in one direction from the receiving portion 111a. The sealing portion 111b may be configured to protrude more than the receiving portion 111a in one direction. The receiving portion 111a may be configured to be in contact with at the end of the battery cell 110, and a predetermined space may be formed between the end of the battery cell 110 and the sealing portion 111b.

In addition, the electrode lead 112 may be configured to protrude toward the front and/or rear side of the receiving portion 111a or the sealing portion 111b of the battery cell 110.

Meanwhile, the battery cell 110 may be provided while standing with the surface that does not include the sealing portion 111b facing downward. As illustrated in FIG. 3, a plurality of battery cells 110 may be arranged side by side in the left-right direction (X-axis direction) while standing in the vertical direction (Z-axis direction). In this case, each battery cell 110 may have the sealing portions 111b facing in the front-back direction (Y-axis direction) and upward direction (+Z-axis direction), and the receiving portion 111a facing in the left-right direction (X-axis direction).

The second block member 420 may be provided on at least one side of the sealing portion 111b. That is, the second block member 420 may be configured such that at least one side is in contact with the sealing portion 111b. That is, the second block member 420 may be configured to be in contact with the front and/or rear side of the receiving portion 111a and also be in contact with the sealing portion 111b. According to the above-implemented configuration of the present disclosure, the second block member 420 may fix the sealing portion 111b.

In addition, the second block member 420 may be provided in contact with the front and/or rear side of the receiving portion 111a. In addition, one side of the second block member 420 may be in contact with the receiving portion 111a, and the other side may be in contact with the bus-bar frame 500.

Meanwhile, referring to FIG. 3, FIG. 15, and FIG. 16, the cell assembly 100 of the battery module 10 according to an embodiment of the present disclosure may include a barrier member 120. The barrier member 120 may be provided between the battery cells 110 so as to partition the plurality of battery cells 110. In particular, at least one barrier member 120 may be included in each battery module 10. A plurality of barrier members 120 may be provided in one direction in which the battery cells 110 are arranged.

The barrier member 120 may be provided between every one or more battery cells 110. In addition, the barrier member 120 may be configured to be in contact with the bus-bar frame 500.

For example, as illustrated in FIG. 15, in the battery module 10 according to an embodiment of the present disclosure, the barrier member 120 may be disposed between every two battery cells 110. Accordingly, the battery cells 110 may be divided into groups of two by the barrier members 120.

The barrier member 120 may be configured as an insulating pad that is thinner than the battery cell 110. The barrier member 120 may be made of a material having excellent heat resistance and/or fire resistance. Alternatively, the barrier member 120 may be made of a compressive pad such as silicone or aerogel.

According to the above-implemented configuration of the present disclosure, the battery cells 110 may be partitioned or divided to prevent gas or flame from spreading to other adjacent barrier members 120 and causing thermal propagation. In addition, according to the above-implemented configuration of the present disclosure, the barrier member 120 may compress the battery cells 110 in the event of swelling of the battery cells 110, thereby contributing to the structural rigidity of the battery cells 110.

The barrier member 120 may be configured to extend in the front-back direction and protrude in the front-back direction more than the sealing portion 111b. That is, the length of the barrier member 120 may be configured to be longer than the length of the battery cells 110. In addition, the barrier member 120 may be configured to come into contact with the inner surface of the bus-bar frame 500.

In this case, the second block member 420 may be provided between the barrier member 120 and the battery cell 110. The second block member 420 may be provided between the barrier member 120 and the sealing portion 111b. One side of the second block member 420 may be in contact with the end of the barrier member 120, and the other side may be in contact with the sealing portion 111b of the battery cell 110.

The second block member 420 may be provided on both sides of the barrier member 120. The second block member 420 may be configured to compress the barrier member 120 from both sides. That is, the second block member 420 may compress the barrier member 120 in the left-right direction. As a result, the position of the barrier member 120 may be fixed. In addition, the barrier member 120 may be prevented from being bent and deformed by the second block member 420.

According to the above-implemented configuration of the present disclosure, even if a thermal event occurs, the high temperature and high pressure venting gas or flame caused by the thermal event may be unlikely to spread to another space while pushing the end of the barrier member 120. Thus, according to the above-implemented configuration of the present disclosure, even if a thermal event occurs in a battery cell 110, the venting gas or flame may be reliably suppressed or prevented from moving to another battery cell 110 and causing thermal propagation.

In addition, a second venting hole H2 may be positioned between adjacent second block members 420. As a result, the venting gas or flame generated in the battery cells 110 between adjacent second block members 420 may be discharged to the outside of the battery module 10 through the second venting hole H2.

As an example, in the embodiment illustrated in FIGS. 15 and 16, two battery cells 110 may be provided between two adjacent barrier members 120, and each of the two barrier members 120 may have a second block member 420 provided on both sides of the rear portion. In addition, a second venting hole H2 may be provided between the second block members 420 provided on the inner sides of the two barrier members 120. That is, the venting paths may be separated for some battery cells 110 inside the bus-bar frame 500 by the second block members 420.

According to the above-implemented configuration of the present disclosure, gas or flame emitted from a battery cell 110 interposed between adjacent barrier members 120 may be discharged to the outside of the module case 300 only through the second venting hole H2 located between the neighboring second block members 420.

As a specific example, referring to the bold arrow illustrated in FIG. 15, if a thermal event occurs in any one of the battery cells 110 interposed between the barrier members 120 so that gas or flame is generated, the gas or flame may be guided to the second venting hole H2 by the second block member 420. In addition, such gas or flame may move to the space between the bus-bar frame 500b and the rear plate 330, and may be guided toward the first venting hole H1 by the first block member 410 and discharged directly to the outside.

According to the above-implemented configuration of the present disclosure, since the venting paths may be separated by not only the first block members 410 but also the second block members 420, the venting gas generated from the group of some battery cells 100 may be suppressed from moving to another group of battery cells 100. Therefore, the thermal runaway propagation to other adjacent battery cells 110 may be prevented.

Meanwhile, the second block member 420 may be configured to be fixed to the inner surface of the bus-bar frame 500. For example, the second block member 420 may be attached to the inner surface of the bus-bar frame 500. Therefore, the second block member 420 may be in contact with the receiving portion 111a and the bus-bar frame 500 in the front-back direction, and may be in contact with the sealing portion 111b and/or the barrier member 120 in the left-right direction.

In this case, the second block member 420 may be configured to receive a compressive force from all sides. For example, the second block member 420 may be provided while being compressed by the receiving portion 111a, the sealing portion 111b, the bus-bar frame 500, and/or the barrier member 120. The second block member 420 may be configured to pressurize the inner surfaces of the receiving portion 111a and the bus-bar frame 500.

According to the above-implemented configuration of the present disclosure, as the second block member 420 is compressed and provided in the front-back direction, the second block member 420 may be in closer contact with the inner surfaces of the receiving portion 111a and the bus-bar frame 500. As a result, the space formed by the second block members 420 may be more sealed, thereby preventing venting gas or flame from moving beyond the second block member 420 to the space where another battery cell 110 is located.

Meanwhile, referring to FIGS. 15 to 18, a plurality of second block members 420 may be disposed on one side and the other side of the battery cell 110. Here, one side of the battery cell 110 may indicate the front side of the battery cell 110, and the other side may indicate the rear side of the battery cell 110.

In this case, the second block members 420 may be provided on one side of the battery cell 110 in a larger number than on the other side of the battery cell 110. That is, the second block members 420 may be configured to have a higher density on the front side of the battery cell 110 than on the rear side of the battery cell 110.

For example, as in the embodiment illustrated in FIGS. 17 and 18, the second block member 420 may be provided between each sealing portion 111b of the battery cell 110 on the front side of the battery module 10. That is, the second block member 420 may be provided in both the space between the front sealing portions 111b of adjacent battery cells 110 and the space between the barrier member 120 and the front sealing portion 111b.

In addition, the second block member 420 may provide a force to compress the sealing portion 111b. The second block member 420 may compress the sealing portion 111b in the left-right direction. The sealing portion 111b on the front side of the battery cell 110 may be positioned and fixed between the second block members 420. In addition, the second block member 420 may be positioned to pressurize the receiving portion 111a to the rear.

On the other hand, referring to FIG. 15 and FIG. 16, on the rear side of the battery module 10, the second block member 420 may be provided only on both sides of the barrier member 120. Accordingly, a space may be provided between the adjacent second block members 420 through which venting gas or flame generated in the battery cell 110 may be vented.

According to the above-implemented configuration of the present disclosure, when a thermal event occurs, the venting gas or flame may be induced to be vented toward the rear side. Specifically, when a thermal event occurs, the internal pressure of the sealing portion 111b of the battery cell 110 may increase. In this case, according to the above-implemented configuration of the present disclosure, the pressure applied to the front sealing portion 111b may be dispersed or reduced by the second block member 420 compressing the front sealing portion 111b of the battery cell 110. As a result, the venting gas may be suppressed or blocked from being discharged through the front sealing portion 111b or the side of the electrode lead 112. In addition, the pressure of the venting gas may be concentrated on the rear sealing portion 111b of the battery cell 110. As a result, the venting gas may be discharged through the rear sealing portion 111b of the battery cell 110.

In addition, according to the above-implemented configuration of the present disclosure, the second block member 420 may prevent the front sealing portion 111b from being exposed to flame or high-temperature gas. Accordingly, it is possible to prevent the front sealing portion 111b from being damaged by external flame or high-temperature gas and suppress the venting gas from being discharged through the front sealing portion 111b.

In addition, according to the above-implemented configuration of the present disclosure, the second block member 420 may compress and fix the front sealing portion 111b, thereby preventing the front sealing portion 111b from being damaged by external pressure.

Meanwhile, referring back to FIG. 4, the battery cell 110 according to an embodiment of the present disclosure may further include a fixing member 113. The fixing member 113 may be configured to fix the upper surface of the battery cell 110.

More specifically, the cell case 111 may include a folding portion 111c that is configured to be folded on one side of the sealing portion 111b where the electrode lead 112 extends. That is, the cell case 111 may have a folding portion 111c on the side sealing portion where the electrode lead 112 is not provided in the sealing portion 111b. This folding portion 111c may be provided on the upper portion of the battery cell 110.

The fixing member 113 may be provided to be attached to the folding portion 111c so as to fix the folded state of the folding portion 111c. The fixing member 113 may be attached to the cell case 111 so as to wrap the folding portion 111c along the thickness direction (X-axis direction) of the battery cell 110.

In particular, the fixing member 113 may be configured to extend in the length direction of the battery cell 110. The fixing member 113 may be configured to extend to have a length corresponding to the length of the battery cell 110. Accordingly, the fixing member 113 may be configured to completely cover the folding portion 111c of the battery cell 110 in the longitudinal direction.

According to the above-implemented configuration of the present disclosure, when a thermal event of the battery cell 110 occurs, the folding portion 111c located at the top may be suppressed from being opened. As a result, the venting gas may be suppressed or blocked from being discharged toward the top of the battery cell 110. In addition, according to the above-implemented configuration of the present disclosure, when a thermal event occurs in the battery cell 110, the rear sealing portion 111b may be opened to induce venting gas to be discharged through the rear sealing portion 111b of the battery cell 110.

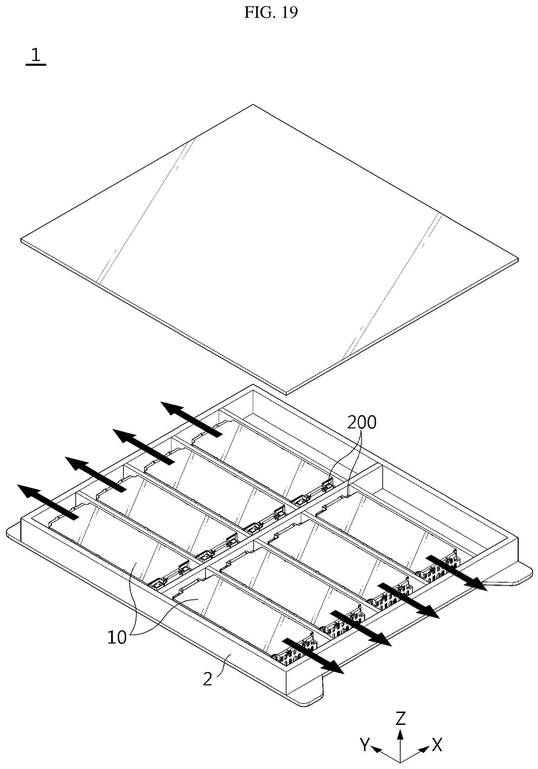

FIG. 19 is a schematically perspective view of a battery pack including a battery module according to an embodiment of the present disclosure.

Referring to FIG. 19, a battery pack 1 according to an embodiment of the present disclosure may include one or more battery modules 10 according to an embodiment of the present disclosure described above. The battery pack 1 according to the present disclosure may further include a pack case 2 for storing the components described above and other components such as a BMS (Battery Management System) for integrated control of charging and discharging of one or more battery modules 10, a current sensor, a fuse, and the like.

Meanwhile, the module case 300 may be excluded from the battery pack 1 according to another embodiment of the present disclosure. That is, in the battery pack 1 according to another embodiment of the present disclosure, the plurality of battery cells 110 may be directly stored in the pack case 2 without being modularized. Such a battery pack 1 may be defined as a cell-to-pack type.

Referring to FIG. 19, the plurality of battery modules 10 may be disposed so that one side equipped with the module terminal 200 faces the inside of the pack case 2. Accordingly, the other side of the battery module 10 having the first venting hole H1 and the second venting hole H2 may be disposed to face the outside of the pack case 2.

According to the above-implemented configuration of the present disclosure, when a thermal event occurs in a battery cell 110 inside the battery module 10, venting gas or flame may be directionally vented toward the rear side of the battery module 10. Accordingly, the venting gas or flame discharged to the rear side may be quickly discharged to the outside of the battery pack 1.

In addition, according to the above-implemented configuration of the present disclosure, since venting gas or flame directed toward the module terminal 200 may be minimized, thermal propagation to other adjacent battery modules 10 may be suppressed or prevented. Accordingly, an event due to thermal runaway of the battery pack 1 including the plurality of battery modules 10, such as a fire or explosion, may be prevented or delayed.

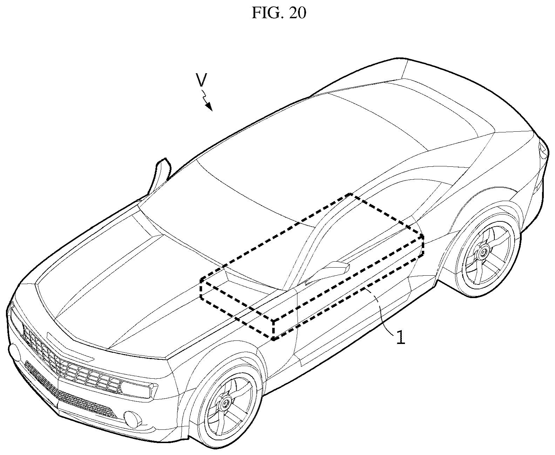

FIG. 20 is a schematically perspective view of a vehicle including a battery pack according to an embodiment of the present disclosure.

Referring to FIG. 20, a vehicle V according to an embodiment of the present disclosure may include one or more battery packs 1 according to an embodiment of the present disclosure or battery modules 10 according to an embodiment of the present disclosure. The vehicle V according to the present disclosure may be, for example, an electric vehicle, a hybrid vehicle, or a plug-in hybrid vehicle. The vehicle V includes a four-wheel vehicle and a two-wheel vehicle. The vehicle V may be driven by power supplied from the battery pack 1 or the battery module 10 according to an embodiment of the present disclosure.

As described above, although the present disclosure has been described with reference to limited embodiments and drawings, the present disclosure is not limited thereto, and various modifications and variations are possible inside the technical idea of the present disclosure and the scope of equivalence of the claims to be described below by those skilled in the art to which the present disclosure pertains.

## Claims

1. A battery module comprising:
a cell assembly comprising a plurality of battery cells;
a module terminal configured to be electrically connected to the plurality of battery cells;
a module case configured to receive the cell assembly, and having the module terminal provided on one side and a first venting hole formed on the other side to discharge gas generated from the battery cell to the outside; and
a block member configured to guide the gas to the first venting hole.

2. The battery module according to claim 1,
wherein a plurality of first venting holes are disposed in at least one direction.

3. The battery module according to claim 1,
wherein each of the plurality of battery cells comprises an electrode lead,
the battery module further comprising a bus-bar frame provided on a side of the battery cell where the electrode lead is provided and having a second venting hole formed to communicate with the first venting hole.

4. The battery module according to claim 3,
wherein a plurality of second venting holes are disposed along a stacking direction of the battery cells.

5. The battery module according to claim 3,
wherein the second venting hole is configured to allow at least some of the electrode leads of the plurality of battery cells to pass therethrough.

6. The battery module according to claim 3,
wherein the block member comprises
a first block member provided on an outer side of the bus-bar frame and configured to suppress gas discharged from the second venting holes from moving along a stacking direction of the battery cells in a space between the bus-bar frame and the other side of the module case.

7. The battery module according to claim 6,
wherein a plurality of first block members are disposed along the stacking direction of the battery cells.

8. The battery module according to claim 6,
wherein the first block member is configured to extend along a height direction of the bus-bar frame.

9. The battery module according to claim 6,
wherein the first block member is configured to be compressed by the bus-bar frame.

10. The battery module according to claim 6,
wherein the first block member is configured to be compressed by the module case.

11. The battery module according to claim 3,
wherein the block member comprises
a second block member interposed between the bus-bar frame and the cell assembly.

12. The battery module according to claim 11,
wherein the second block member is configured to extend along a height direction of the battery cell.

13. The battery module according to claim 11,
wherein the battery cell comprises
a receiving portion configured to receive an electrode assembly and extending in one direction, and
a sealing portion configured to protrude in one direction from the receiving portion, and
wherein the second block member is provided on at least one side of the sealing portion.

14. The battery module according to claim 13,
wherein the cell assembly further comprises a barrier member provided between the battery cells, and
wherein the second block member is provided between the barrier member and the sealing portion of the battery cell.

15. The battery module according to claim 13,
wherein the second block member is configured to pressurize an inner surfaces of the receiving portion and the bus-bar frame.

16. The battery module according to claim 14,
wherein a plurality of second block members are disposed on one side and the other side of the battery cell, respectively, and
wherein the second block members are provided in a larger number on one side of the battery cell than on the other side of the battery cell.

17. The battery module according to claim 1,
wherein the battery cell comprises
a fixing member configured to fix an upper surface.

18. A battery pack comprising a battery module according to any one of claims 1 to 17.

19. A vehicle comprising a battery module according to any one of claims 1 to 17.
